# EUROPÄISCHE PATENTSCHRIFT

(11) **EP 2 656 484 B1**
(45) Veröffentlichungstag und Bekanntmachung des Hinweises auf die Patenterteilung: **11.02.2015**
(21) Anmeldenummer: 11802712.7
(22) Anmeldetag: 20.12.2011
(51) Int. Cl.: H02K 1/18, H02K 1/14, H02K 16/00

(54) **TRANSVERSALFLUSSMASCHINE**
TRANSVERSE FLUX MACHINE
MACHINE A FLUX TRANSVERSAL

(30) Priorität: 20.12.2010 EP 10195843
(43) Veröffentlichungstag der Anmeldung: 30.10.2013
(73) Patentinhaber: Mathys, Reinhold, 4500 Solothurn (CH)
(72) Erfinder: BÜTSCHI, Thomas, CH-3647 Reutigen (CH); KUNZ, Beat, CH-3706 Leissigen (CH); ERNI, Michel, CH-3652 Hilterfingen (CH)
(74) Vertreter: AMMANN PATENTANWÄLTE AG BERN
(86) Internationale Anmeldenummer: PCT/EP2011/073349
(87) Internationale Veröffentlichungsnummer: WO 2012/084907

(56) Entgegenhaltungen:
- EP-A1- 1 632 427
- DE-A1- 3 224 466
- DE-A1-102004 057 101
- DE-A1-102005 017 934
- DE-U1- 20 013 637
- DE-U1- 29 919 904
- US-A- 4 987 331
- US-A1- 2005 046 287
- US-A1- 2005 231 059
- US-A1- 2007 035 197
- US-B1- 6 285 108

## Beschreibung

Die Erfindung betrifft eine Transversalflussmaschine mit mindestens einer aussenliegenden Rotor-Poleinheit und mindestens einer innenliegenden, auf einer Statorachse angeordneten Stator-Poleinheit, enthaltend eine koaxial zur Maschinenlängsachse angeordneten Spule und einen Statorkern, der aus einem in der Spule angeordneten Flussröhr und an beiden Enden des Flussrohrs angeordneten Zahnscheiben mit am Umfang angeordneten, radial orientierten Zähnen zusammengesetzt ist, wobei Mittel zur formschlüssigen Festlegung der gegenseitigen Winkelposition der Zahnscheiben und/oder der Zahnscheiben gegenüber der Statorachse vorhanden sind.

Es sind Transversalflussmaschinen bekannt, beispielsweise aus den Dokumenten EP1005136A1 und WO2007000054A1, bei denen der Stator in Umfangsrichtung hintereinander angeordnete U-förmige Joche aufweist. Die Herstellung solcher U-Joche ist zwar relativ einfach, jedoch ist deren Montage am Stator ziemlich aufwändig. Ein wesentlicher Nachteil dieser Konstruktion besteht indessen darin, dass die Statorwicklung zwischen die Schenkel der U-Joche durch Aufwinden eingebracht werden muss.

Es sind auch Transversalflussmaschinen bekannt, bei denen der Statorkern aus einem in der Spule angeordneten Flussrohr und an beiden Enden des Flussrohrs angeordneten Zahnscheiben mit am Umfang angeordneten, radial orientierten Zähnen zusammengesetzt ist. Ein solcher Statorkern ist relativ einfach herzustellen und zu montieren. Insbesondere kann mit einem solchen Statorkern eine vorgefertigte Spule als Statorwicklung verwendet werden.

Die Zähne einer Poleinheit werden so gegeneinander ausgerichtet, dass jeweils ein Zahn einer Zahnscheibe mit einer Lücke der anderen Zahnscheibe ausgerichtet ist. Ausserdem werden bei Maschinen mit mehr als einer Poleinheit die Zähne der einzelnen Poleinheiten entsprechend der Polzahl gegeneinander versetzt angeordnet. Es wurde gefunden, dass die Winkel-Positioniergenauigkeit der Zähne einen sehr hohen Einfluss auf die Leistung und das Rastmoment der Maschine hat.

Aus dem Dokument DE29919904U1 ist ein bürstenloser Gleichstrommotor mit ähnlichen Merkmalen wie bei der eingangs genannten Transversalflussmaschine bekannt.

Ausgehend von diesem Stand der Technik liegt der Erfindung die Aufgabe zugrunde, eine Transversalflussmaschine der eingangs genannten Art vorzuschlagen, die einfach herstellbar ist und bei der sich die Zahnscheiben winkelmässig sehr genau positionieren lassen.

Gelöst werden diese Aufgaben erfindungsgemäss dadurch, dass das Flussrohr quer geteilt ist, dass jeweils eine Zahnscheibe mit einem Teil des Flussrohrs fest verbunden ist und dass die Mittel zur formschlüssigen Festlegung der gegenseitigen Winkelposition der Zahnscheiben als zwischen den beiden Teilen des Flussrohres wirkende Formschlusselemente ausgebildet sind.

Durch die Mittel zur formschlüssigen Festlegung hängt die Positioniergenauigkeit ausschliesslich von der Fertigungsgenauigkeit der einzelnen Teile ab und Ungenauigkeiten bei der Montage der Maschine sind praktisch ausgeschlossen.

Nach einer Ausführungsart sind die Mittel zur formschlüssigen Festlegung der gegenseitigen Winkelposition der Zahnscheiben als zwischen den Zahnscheiben und dem Flussrohr wirkende Formschlusselemente ausgebildet. Somit lässt sich eine hohe Positioniergenauigkeit der beiden Zahnscheiben einer Stator-Poleinheit unabhängig von deren Drehlage auf der Statorwelle erreichen.

Gemäss einer weiteren Ausführungsart bestehen die Mittel zur formschlüssigen Festlegung der Winkelposition der Zahnscheiben gegenüber der Statorachse als ringförmige Körper mit mindestens einem axial abstehenden, zwischen die Zähne greifenden Haltefortsatz und mindestens einem radial nach innen ragenden, in eine Längsnut der Statorachse greifenden Führungsfortsatz. Damit werden die beiden Zahnscheiben einer Stator-Poleinheit über deren Winkel-Festlegung gegenüber der Statorachse exakt gegeneinander positioniert. Darüber hinaus können mit dieser Massnahme auch die Zahnscheiben zweier oder mehrerer Stator-Poleinheiten gegenseitig exakt ausgerichtet werden.

Nach einer anderen Ausführungsart weisen die Zahnscheiben mindestens einen radial orientierten Schlitz auf. Dadurch werden ein Ringschluss und damit einhergehende Verluste verhindert.

Gemäss einer weiteren Ausführungsart weist das Flussrohr mindestens einen radial orientierten Schlitz auf. Dadurch werden ein Ringschluss und damit einhergehende Verluste verhindert.

Nach einer besonderen Ausführungsart ist der Schlitz im Flussrohr in einem Winkel zur Maschinenlängsachse angeordnet. Diese Anordnung ermöglicht es, dass der Schlitz im Flussrohr mit den Schlitzen in den benachbarten Zahnscheiben ausgerichtet ist. Generell erreicht man durch die erwähnten Schlitze in den Zahnscheiben und dem Flussrohr entweder eine höhere Leistung der Transversalflussmaschine oder man kann die Maschine bei gleicher Leistung kleiner bauen.

Gemäss einer weiteren Ausführungsart sind die Zahnscheiben aus rechtwinklig zur Maschinenlängsachse orientierten Schichten zusammengesetzt. Die einzelnen Schichten lassen sich beispielsweise durch Stanzen einfach herstellen und zu Zahnscheiben zusammensetzen.

Gemäss einer anderen Ausführungsart ist eine Steuereinheit auf der Statorachse angeordnet. Dadurch bildet die Transversalflussmaschine eine einbaufertige Einheit.

Schliesslich ist nach einer weiteren Ausführungsart vorgesehen, dass die Steuereinheit mittels Steckverbindungen mit elektrischen Leitern verbunden ist. Auf diese Weise kann die Steuereinheit sehr einfach montiert und gegebenenfalls ersetzt werden.

Ausführungsbeispiele der Erfindung sowie Varianten des Flussrohrs, die nicht Teil der Erfindung sind, werden nachstehend unter Bezugnahme auf die angefügten Zeichnungen beispielsweise näher beschrieben. Es zeigt
- Figuren 1 bis 4: jeweils in einer vereinfachten Längsschnittansicht eine Ausführungsart eines Joches,
- Figuren 5 bis 9: jeweils in einer vereinfachten perspektivischen Ansicht eine Variante eines Flussrohrs
- Figur 10: eine perspektivische Explosionsansicht einer weiteren Ausführungsart des Jochaufbaus,
- Figur 11: eine perspektivische Explosionsansicht einer Stator-Poleinheit,
- Figur 12: eine perspektivische Explosionsansicht des Stators, wobei dieser teilweise zusammengesetzt ist,
- Figur 13: eine perspektivische Ansicht des vollständig zusammengesetzten Stators,
- Figur 14: einen Längsschnitt durch eine Ausführungsart des Stators,
- Figur 15: einen Querschnitt durch die Ausführungsart des Stators von Figur 14,
- Figur 16: eine perspektivische Explosionsansicht eines Teils des Rotors, der Statorachse und einer Steuereinheit,
- Figur 17: eine Querschnittsansicht eines Teils des Rotors,
- Figur 18: eine Seitenansicht von drei Rotor-Poleinheiten und
- Figuren 19 und 20: jeweils in einer vereinfachten Längsschnittansicht eine weitere Ausführungsart eines Joches.

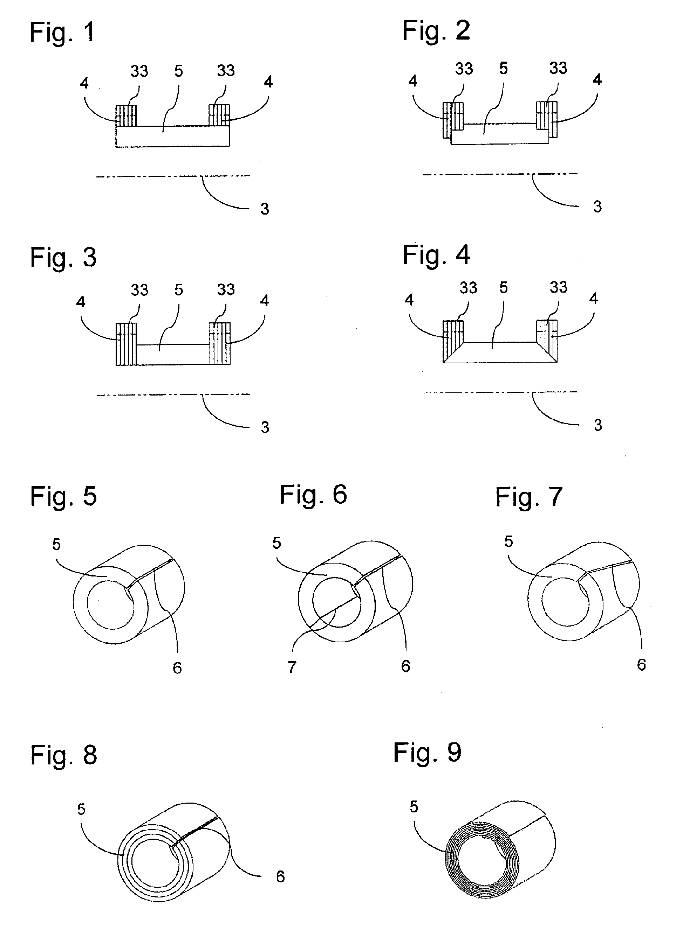

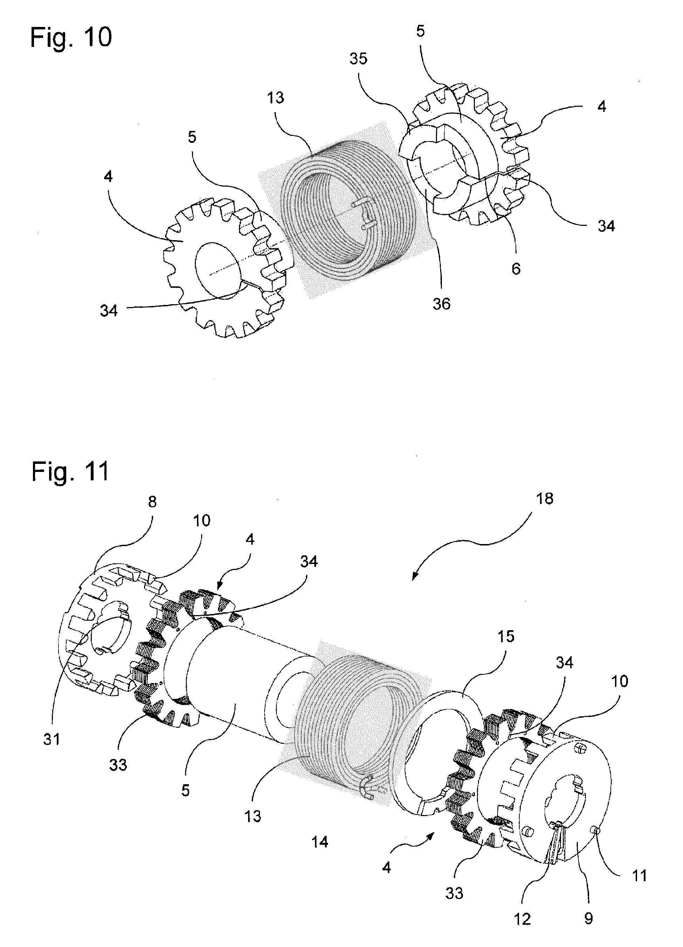

Die Figuren 1 bis 4 zeigen vier Varianten des Aufbaus der Joche des Stators eines Ausführungsbeispiels der erfindungsgemässen Transversalflussmaschine. Dabei ist jedes Joch, beginnend auf der linken Seite der jeweiligen Figur, aus einem Zahn 33 einer Zahnscheibe 4, aus einem quergeteilten Flussrohr 5 und einem weiteren Zahn 33 einer weiteren Zahnscheibe 4 zusammengesetzt. Die Figuren zeigen nur die Hälfte eines Längsschnitts, wobei mit 3 die Längsachse der Maschine angedeutet ist. Die Zahnscheiben 4 weisen einen geschichteten Aufbau auf, wobei die Schichten rechtwinklig zur Längsachse 3 orientiert sind. Die Zahnscheiben 4 sind am Besten in Figur 11 zu sehen. Bei der Variante nach Figur 1 haben die Zahnscheiben eine durchgehende zentrale Öffnung, deren Innendurchmesser dem Aussendurchmesser des Flussrohrs 5 entspricht und sind an beiden Enden bündig auf das Flussrohr 5 aufgesetzt. Bei der Variante nach Figur 2 hat das Flussrohr 5 an beiden Enden jeweils einen zylindrischen Ansatz und die Zahnscheiben 4 weisen eine entsprechend im Durchmesser abgestufte zentrale Öffnung auf. Bei der Variante nach Figur 3 haben die Zahnscheiben 4 eine durchgehende zentrale Öffnung, deren Durchmesser dem Innendurchmesser des Flussrohres 5 entspricht und die Zahnscheiben 4 sind beiderseits stirnseitig an das Flussrohr 5 angefügt. Bei der Variante nach Figur 4 haben die Zahnscheiben 4 jeweils eine zentrale, konische Öffnung und das Flussrohr 5 ist an beiden Enden konisch zulaufend ausgebildet, sodass die Zahnscheiben 4 darauf passen. Alle vier beschriebenen und dargestellten Varianten haben den gemeinsamen Vorteil, dass beim Montieren der Maschine eine fertig gewickelte Spule auf das quergeteilte Flussrohr 5 geschoben werden kann, spätestens bevor die zweite Zahnscheibe 4 aufgesetzt oder angesetzt wird. Die Zahnscheiben 4 haben vorzugsweise einen radialen Schlitz, um einen Ringschluss zu vermeiden, wie dies später noch anhand der Figur 11 erläutert wird. Bei allen Varianten gemäss den Figuren 1 bis 4 können zwischen den Zahnscheiben 4 und dem Flussrohr 5 wirksame Formschlusselemente vorgesehen sein, etwa Zahn- oder Polygonprofile oder Keilverbindungen, um zu gewährleisten, dass die Zähne 33 von zu einer Poleinheit gehörenden Zahnscheiben 4 zwangsläufig exakt gegeneinander ausgerichtet sind.

Die Figuren 5 bis 9 zeigen vier Varianten des Aufbaus des Flussrohrs 5 einer Transversalflussmaschine. Bei den Varianten nach den Figuren 5 bis 8 weist das Flussrohr 5 jeweils einen radialen Schlitz 6 auf, der im Wesentlichen in Richtung der Längsachse 3 der Maschine orientiert ist. Der Schlitz 6 verhindert einen Ringschluss, wodurch eine höhere Maschinenleistung erzielt oder bei gleicher Leistung ein günstigeres Material für das Flussrohr 5 eingesetzt werden kann. Figur 5 zeigt ein einstückiges Flussrohr 5, während das Flussrohr 5 nach Figur 6 aus zwei Halbschalen aufgebaut ist, die an einer parallel zur Längsachse orientierten Verbindungsstelle 7 zusammengesetzt sind. Nach dem gleichen Prinzip kann das Flusstohr 5 auch als mehr als zwei Schalenteilen zusammengesetzt sein. Dadurch wird die Herstellung des Flussrohrs 5 vereinfacht. Bei der Variante nach Figur 7 ist der Schlitz 6 in einem spitzen Winkel zur Mittelachse ausgerichtet. Dies erlaubt es, den Schlitz 6 mit den Schlitzen 34 (Figur 11) der benachbarten Zahnscheiben auszurichten. Bei der Variante nach Figur 8 ist das Flussrohr 5 aus einer Anzahl von koaxial angeordneten dünnwandigen Hülsen zusammengesetzt und das Flussrohr 5 gemäss Figur 9 ist aus einem dünnen Blechstreifen aufgewickelt. Selbstverständlich kann auch bei dieser Variante nach dem Wickeln noch ein Schlitz angebracht werden. Je nach den an die Transversalflussmaschine gestellten Anforderungen können das Flussrohr 5 und die Zahnscheiben 4 aus unterschiedlichen Materialien bestehen. Bei verhältnismässig geringen Drehzahlen kann beispielsweise Stahl verwendet werden. Bei etwas höheren Anforderungen empfiehlt sich die Herstellung der genannten Teile aus beschichtetem Elektroblech. Hohe Drehzahlen und Leistung erreicht man mit einem Material, das unter der Bezeichnung SMC bekannt ist und eine hohe Flussdichte zulässt. Gleichzeitig vereinfacht sich damit die Herstellung der Teile, da auf einen geschichteten Aufbau verzichtet werden kann.

Figur 10 zeigt in einer perspektivischen Explosionsansicht eine weitere Möglichkeit, wie die Zahnscheiben 4 mit dem Flussrohr 5 zusammengesetzt werden können. Dabei ist das Flussrohr 5 geteilt, sodass es in einer definierten Lage zusammengesteckt werden kann, in der die Zähne der beiden Zahnscheiben wunschgemäss miteinander ausgerichtet sind. Im Beispiel wird dies, wie bei einer Klauenkopplung, durch Klauen 35 erreicht, die in Ausnehmungen 36 am gegenüberliegenden Teil eingreifen. In dieser Figur sind auch die Schlitze 34 in den Zahnscheiben 4 und der Schlitz 6 im Flussrohr sichtbar. Ausserdem ist eine Spule 13 eingezeichnet, um zu verdeutlichen, dass auch bei dieser Ausführungsart eine vorgefertigte Spule 13 eingesetzt werden kann.

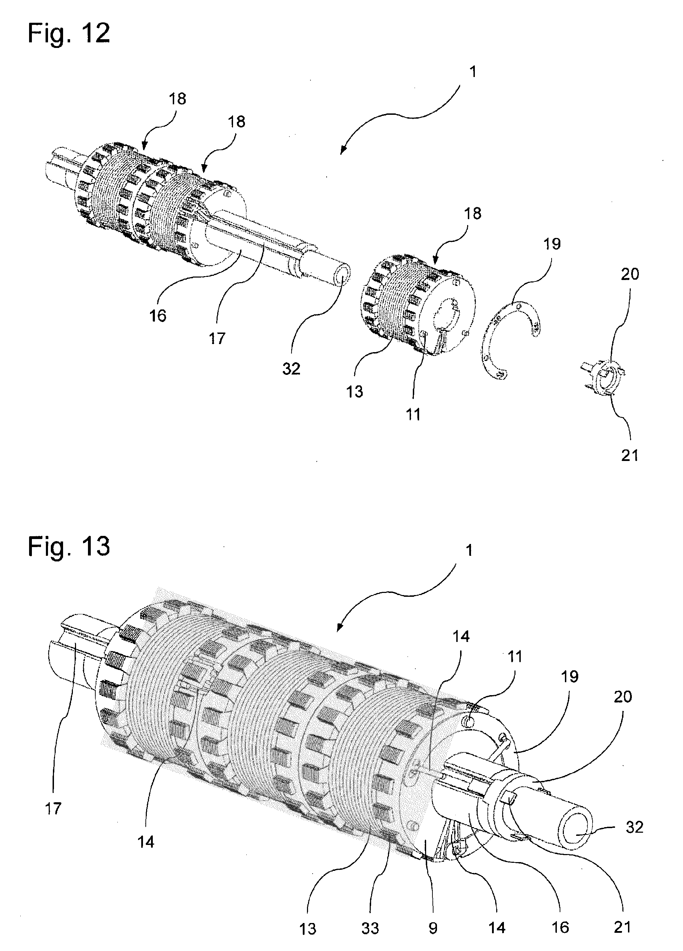

Figur 11 zeigt eine perspektivische Explosionsansicht einer Stator-Poleinheit 18. Diese kann praktisch in der Reihenfolge von links nach rechts in der Figur montiert werden. Ein Phasendeckel 8 hat axiale Haltefortsätze 10, mit denen er zwischen die Zähne 33 einer benachbarten Zahnscheibe 4 greift. In einer zentralen Bohrung hat der Phasendeckel 8 radial nach innen ragende Führungsfortsätze 31, mit denen er später in Nuten 17 (Figur 12) einer Statorachse 16 (Figur 12) eingreift und dadurch den Phasendeckel und damit die Zahnscheibe 4 in einer definierten Winkellage auf der Statorachse hält. Ein Flussrohr 5 wird, beispielsweise entsprechend der weiter oben anhand der Figur 1 beschriebenen Variante, in die Zahnscheibe 4 gesteckt, sodass es mit seiner in der Figur 11 linken Stirnseite am Phasendeckel 8 anliegt. Anschliessend kann eine Spule 13 auf das Flussrohr 5 geschoben werden. Die Anschlussleiter der Spule 13 sind mit 14 bezeichnet. Ein Abstandhalter 15 hat einen radial verlaufenden Schlitz, der dazu dient, den Anschlussleiter 14 aus der innersten Lage der Spule 13 nach aussen zu führen. Mit der Montage einer weiteren Zahnscheibe 4 und anschliessend eines Phasenträgers 9 mit Haltefortsätzen 10 wird die Stator-Poleinheit 18 vervollständigt. Wie vorangehend im Zusammenhang mit dem Flussrohr 5 beschrieben, haben auch die Zahnscheiben 4 vorteilhaft einen radialen Schlitz 34, um einen Ringschluss zu vermeiden. Der Phasenträger 9 hat radial verlaufende Nuten 12 für die Durchführung von Leitern und axial abstehende Positionierzapfen 11, deren Funktion nachstehend anhand der Figur 12 erläutert wird.

Figur 12 zeigt einen Stator 1 in einer perspektivischen Explosionsansicht, wobei zwei Stator-Poleinheiten 18 bereits auf der Statorachse 16 montiert sind, die dritte Stator-Poleinheit 18 jedoch noch nicht. Deutlich ist zu sehen, dass die Statorachse 16 an ihrem Umfang Längsnuten 17 hat und im Zentrum eine längs verlaufende Bohrung 32. Rechts in der Figur ist ein Kontaktring 19 zu sehen, der dazu bestimmt ist, drei Wicklungsenden der Spulen 13 miteinander zu verbinden, um einen Sternpunkt zu bilden. Der Kontaktring wird mithilfe der Positionierzapfen 11 am Phasenträger 9 fixiert. Schliesslich ist ganz rechts in Figur 12 eine Steckkontakteinheit 20 abgebildet, die drei Steckkontakte 21 umfasst, welche mit in den Längsnuten 17 der Statorachse geführten Leitern zu verbinden sind.

Figur 13 zeigt in einer perspektivischen Ansicht einen fertig zusammengestellten Stator 1. Dieser wird später noch mit einer Vergussmasse vergossen, sodass alle seine Komponenten in der dargestellten Lage fixiert und zudem gegen Feuchtigkeit und Schmutz geschützt sind. Als Vergussmasse kann beispielsweise Polyurethan (PUR) oder ein Epoxidharz (EP) sein. Bei den Zahnscheiben 4 sind nur die Spitzen der Zähne sichtbar, der Rest ist durch den Phasendeckel bzw. den Phasenträger 9 verdeckt. Gut sichtbar sind die Spulen 13 und der durch die Positionierzapfen 11 fixierte Kontaktring 19. Auch ist gut zu erkennen, wie die Anschlussleiter 14 einerseits zwischen den Zähnen 33 der Zahnscheiben 4 hindurch und andererseits durch die Längsnut 17 in der Statorachse 16 geführt und mit den Steckkontakten 21 der Steckkontakteinheit 20 verbunden sind.

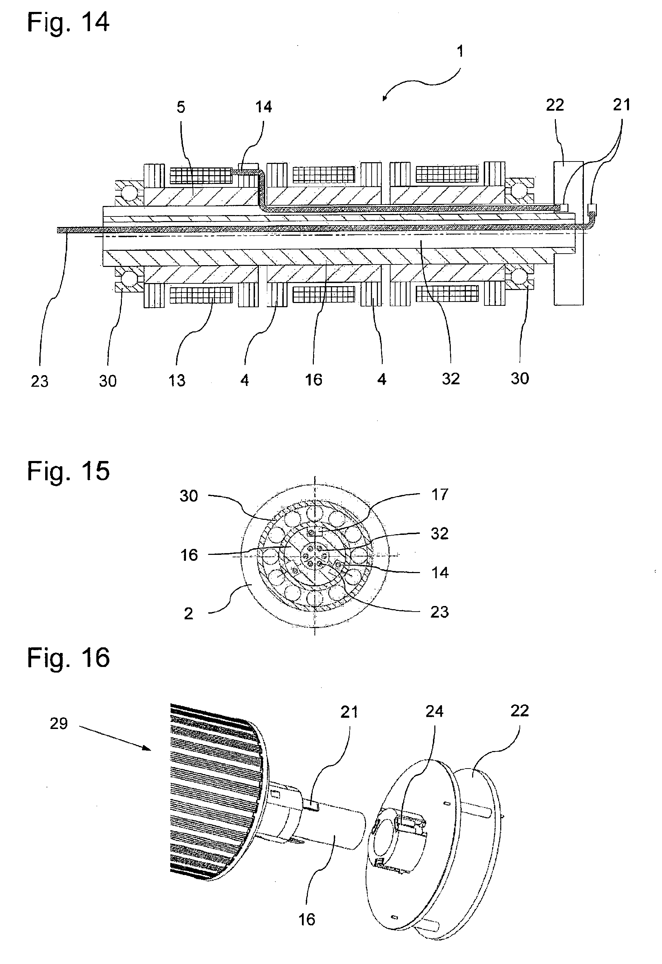

Figur 14 zeigt einen vereinfachten Längsschnitt durch den Stator 1, wobei hier besonders deutlich zu erkennen ist, wie Leiter 23 für die Speisung und Steuerung der Transversalflussmaschine durch die Bohrung 32 in der Statorachse 16 zu einer auf das in der Figur rechte Ende der Statorachse 16 aufgesteckten Steuereinheit 22 führen und dort mit Steckkontakten 21 verbunden sind. Von der Steuereinheit 22 führen Anschlussleiter 14 zu den drei Spulen 13. In beiden Endbereichen der Statorachse 16 ist jeweils ein im Beispiel als Kugellager ausgebildetes Lager 30 angeordnet. Auf den Aussenringen dieser Lager 30 stützt sich bei der fertig montierten Maschine der Rotor 2 (Figur 15) ab.

Figur 15 zeigt einen Querschnitt durch die Transversalflussmaschine, wobei von innen nach aussen die durch die zentrale Bohrung 32 der Statorachse 16 geführten Leiter 23 und die in den Längsnuten 17 der Statorachse 16 angeordneten Anschlussleiter 14 zu erkennen sind. Das Lager 30 trägt den aussenliegenden Rotor 2, der in dieser Figur nur schematisch dargestellt ist.

In Figur 16 ist in einer perspektivischen Explosionsansicht das Ende der Statorachse 16 dargestellt, das rechts aus einer Rotor-Poleinheit 29 herausragt. Die Figur veranschaulicht, wie die Steuereinheit 22 auf die Statorachse 16 aufgeschoben und mithilfe der Steckkontakte 21 und 24 angeschlossen werden kann.

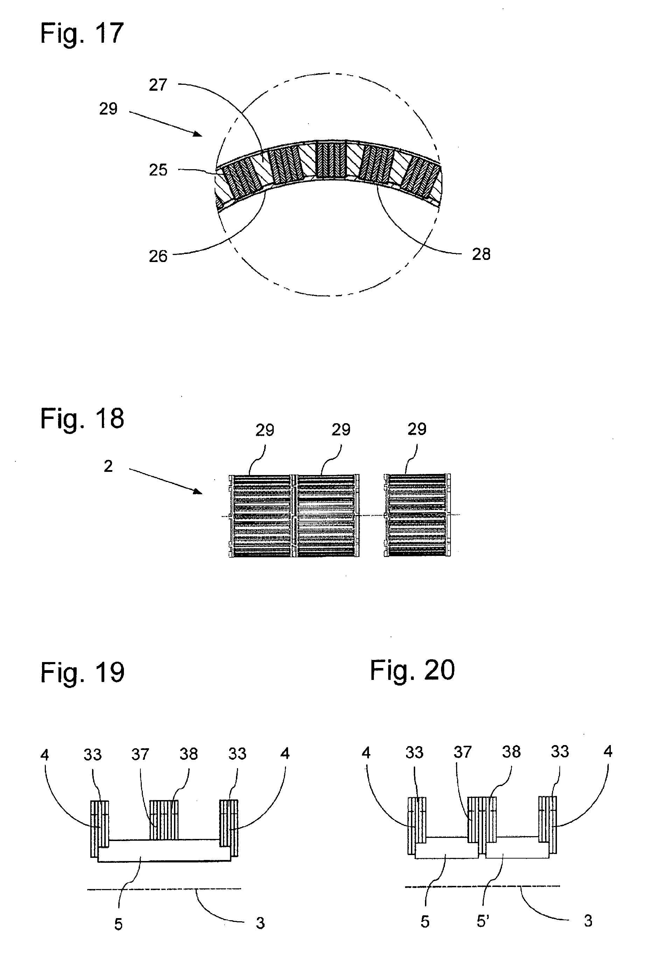

Figur 17 zeigt in einer Querschnittsansicht einen Ausschnitt aus einer Rotor-Poleinheit 29. Ein relativ dünnwandiger Rotorträger 26 nimmt an seinem Umfang Rotormagnete 25 auf, die als Dauermagnete und vorzugsweise als Schichtkörper aufgebaut sind. Die einzelnen Schichten können dabei beispielsweise durch Kleben oder Nieten miteinander verbunden sein. An den mit 28 bezeichneten Stellen weist der Rotorträger 26 aussen Vertiefungen auf, wodurch die Wandung an diesen Stellen sehr dünn ist, sodass der Luftspalt zwischen den Rotormagneten 25 und den Jochen möglichst dünn ist. Zwischen den Rotormagneten 25 und radial ausserhalb diesen ist eine Vergussmasse 27 zu sehen, die wie die im Zusammenhang mit dem Stator 1 erwähnte Vergussmasse beispielsweise aus PUR oder EP bestehen kann.

Figur 18 macht deutlich, wie mehrere, im Beispiel drei Rotor-Poleinheiten 29 hintereinander angeordnet und zu einem Rotor 2 verbunden werden können. Der Rotor 2 kann aussen ein Mantelrohr (nicht dargestellt), beispielsweise aus Aluminium aufweisen. Durch dieses Mantelrohr und insbesondere die Vergussmasse sind alle Komponenten des Rotors 2 gegen Korrosion geschützt.

Der modulare Aufbau mit den Stator-Poleinheiten 18 und den Rotor-Poleinheiten 29 erlaubt es, einen Motor nach Bedarf zusammenzustellen, indem praktisch nach Belieben Phasen aneinandergereiht werden.

Die beschriebene Transversalflussmaschine kann sowohl als Motor als auch als Generator betrieben werden.

Die Figuren 19 und 20 zeigen zwei weitere Ausführungsarten des Aufbaus der Joche der Statoreinheit eines Ausführungsbeispiels der erfindungsgemässen Transversalflussmaschine. Auf einer Phase kann durch das Einfügen einer Mittelscheibe 37 die wirksame Anzahl der Zähne verdoppelt werden. Statt beispielsweise über sechs Einzelphasen (mit entsprechender Ansteuerung) wird dabei eine höhere Leistung mit nur drei Rotorphasen erreicht. Der Versatz um eine halbe Zahnbreite wird in der Mittelscheibe 37 realisiert. Das heisst, die beiden Aussenscheiben 4 sind parallel mit gleich ausgerichteten Zähnen 33 angeordnet, während die Zähne 38 der Mittelscheibe 37 um die halbe Zahnbreite versetzt sind. Der Magnet-Fluss läuft jeweils von einer Aussenscheibe 4 (Nordpol) zur Mittelscheibe (Südpol) und über das Flussrohr zurück. Dabei können die Rotormagnete 25 besser genutzt werden. Bei der einfachen Anordnung, wie anhand der Figuren 1 bis 4 beschrieben, werden die Rotormagnete 25 in deren Mitte kaum durchflossen. Mit der erweiterten Phase können die Rotormagnete 25 besser ausgenutzt werden. Zudem nehmen durch den kürzeren Rückflussweg die Verluste im Flussrohr 5 ab. Mit unwesentlich mehr Eisen für die Mittelscheibe 37 bei gleicher Magnetmasse und weniger Kupfer für die Spulen kann die Leistung erhöht werden. Die beschriebene Anordnung einer Mittelscheibe 37 bewirkt im Betrieb der Transversalflussmaschine als Motor, dass dieser später in die Sättigung kommt und so mehr Drehmoment hat. Beim Betrieb der Transversalflussmaschine als Generator bewirkt die Mittelscheibe 37 beinahe eine Verdoppelung des erzeugten Stroms. Die sehr teure Magnetmasse der Rotormagnete 25 kann mit der Mittelscheibe 37 effizienter genutzt werden. Figur 19 zeigt den Aufbau mit einem einzigen Flussrohr 5 pro Phase, während Figur 20 ein Ausführungsbeispiel mit zwei getrennten Flussrohren 5, 5' pro Phase illustriert. Je nach gewünschtem Effekt können die beiden Wicklungen pro Phase parallel oder in Serie geschaltet werden.

**Bezugszeichenliste**

| | | | |
|---|---|---|---|
| 1 | Stator | 30 | Lager |
| 2 | Rotor | 31 | Führungsfortsatz |
| 3 | Längsachse | 32 | Bohrung |
| 4 | Zahnscheibe | 33 | Zähne |
| 5 | Flussrohr | 34 | Schlitz |
| 5' | Flussrohr | 35 | Klaue |
| 6 | Schlitz | 36 | Ausnehmung |
| 7 | Verbindungsstelle | 37 | Mittelscheibe |
| 8 | Phasendeckel | 38 | Zähne |
| 9 | Phasenträger | 39 | |
| 10 | Haltefortsatz | 40 | |
| 11 | Positionierzapfen | | |
| 12 | Nuten | | |
| 13 | Spule | | |
| 14 | Anschlussleiter | | |
| 15 | Abstandhalter | | |
| 16 | Statorachse | | |
| 17 | Längsnut | | |
| 18 | Stator-Poleinheit | | |
| 19 | Kontaktring | | |
| 20 | Steckkontakteinheit | | |
| 21 | Steckkontakt | | |
| 22 | Steuereinheit | | |
| 23 | Leiter | | |
| 24 | Steckkupplung | | |
| 25 | Rotormagnet | | |
| 26 | Rotorträger | | |
| 27 | Vergussmasse | | |
| 28 | Stelle | | |
| 29 | Rotor-Poleinheit | | |

## Patentansprüche

1. Transversalflussmaschine mit mindestens einer aussenliegenden Rotor-Poleinheit (29) und mindestens einer innenliegenden, auf einer Statorachse (16) angeordneten Stator-Poleinheit (18), enthaltend eine koaxial zur Maschinenlängsachse (3) angeordneten Spule (13) und einen Statorkern, der aus einem in der Spule (13) angeordneten Flussrohr (5) und an beiden Enden des Flussrohrs (5) angeordneten Zahnscheiben (4) mit am Umfang angeordneten, radial orientierten Zähnen (33) zusammengesetzt ist, wobei Mittel (8, 9, 10, 35, 36) zur formschlüssigen Festlegung der gegenseitigen Winkelposition der Zahnscheiben (4) und/oder der Zahnscheiben (4) gegenüber der Statorachse (16) vorhanden sind, **dadurch gekennzeichnet, dass** das Flussrohr quer geteilt ist, dass jeweils eine Zahnscheibe (4) mit einem Teil des Flussrohrs fest verbunden ist und dass die Mittel zur formschlüssigen Festlegung der gegenseitigen Winkelposition der Zahnscheiben (4) als zwischen den beiden Teilen des Flussrohres (5) wirkende Formschlusselemente (35, 36) ausgebildet sind.

2. Transversalflussmaschine nach Anspruch 1, **dadurch gekennzeichnet, dass** die Mittel zur formschlüssigen Festlegung der gegenseitigen Winkelposition der Zahnscheiben (4) als zwischen den Zahnscheiben (4) und dem Flussrohr (5) wirkende Formschlusselemente ausgebildet sind.

3. Transversalflussmaschine nach einem der vorangehenden Ansprüche, **dadurch gekennzeichnet, dass** die Mittel zur formschlüssigen Festlegung der Winkelposition der Zahnscheiben (4) gegenüber der Statorachse als ringförmige Körper (8, 9) mit mindestens einem axial abstehenden, zwischen die Zähne (33) greifenden Haltefortsatz (10) und mindestens einem radial nach innen ragenden, in eine Längsnut (17) der Statorachse (16) greifenden Führungsfortsatz (31) bestehen.

4. Transversalflussmaschine nach einem der vorangehenden Ansprüche, **dadurch gekennzeichnet, dass** die Zahnscheiben (4) mindestens einen radial orientierten Schlitz (34) aufweisen.

5. Transversalflussmaschine nach einem der vorangehenden Ansprüche, **dadurch gekennzeichnet, dass** das Flussrohr (5) mindestens einen radial orientierten Schlitz (6) aufweist.

6. Transversalflussmaschine nach Anspruch 5, **dadurch gekennzeichnet, dass** der Schlitz (6) im Flussrohr in einem Winkel zur Maschinenlängsachse (3) angeordnet ist.

7. Transversalflussmaschine nach einem der vorangehenden Ansprüche, **dadurch gekennzeichnet, dass** die Zahnscheiben (4) aus rechtwinklig zur Maschinenlängsachse (3) orientierten Schichten zusammengesetzt sind.

8. Transversalflussmaschine nach einem der vorangehenden Ansprüche, **dadurch gekennzeichnet, dass** eine Steuereinheit (22) auf der Statorachse (16) angeordnet ist.

9. Transversalflussmaschine nach einem der vorangehenden Ansprüche, **dadurch gekennzeichnet, dass** zwischen den beiden Zahnscheiben (4) eine weitere Zahnscheibe (37) mit am Umfang angeordneten, radial orientierten Zähnen (38) angeordnet ist, wobei die Zähne (38) der weiteren Zahnscheibe (37) gegenüber den Zähnen (33) der beiden Zahnscheiben (4) in Umfangsrichtung um eine halbe Zahnbreite versetzt sind.

## Claims

1. Transverse flux machine having at least one external rotor pole unit (29) and at least one internal stator pole unit (18) arranged on a stator shaft (16) and comprising a coil (13) that is arranged coaxially to the longitudinal axis (3) of the machine as well as a stator core that is composed of a flux tube (5) arranged in the coil (13) and of toothed disks (4) arranged at both ends of the flux tube (5) and having circumferentially arranged, radially oriented teeth (33), wherein means (8, 9, 10, 35, 36) are provided for positively locking the angular positions of the toothed disks (4) relative to each other and/or those of the toothed disks (4) relative to the stator shaft (16), **characterised in that** the flux tube is transversely divided, **in that** each toothed disk (4) is rigidly connected to a respective part of the flux tube, and **in that** the means for positively locking the angular positions of the toothed disks (4) relative to each other are in the form of positive locking elements (35, 36) acting between the two parts of the flux tube (5).

2. Transversal flux machine according to claim 1, **characterised in that** the means for positively locking the angular positions of the toothed disks (4) relative to each other are in the form of positive locking elements acting between the toothed disks (4) and the flux tube (5).

3. Transversal flux machine according to one of the preceding claims, **characterised in that** the means for positively locking the angular positions of the toothed disks (4) relative to the stator shaft consist of annular bodies (8, 9) having at least one axially salient retention projection (10) that engages between the teeth (33) and at least one radially inwardly salient guiding projection (31) that engages in a longitudinal groove (17) of the stator shaft (16).

4. Transversal flux machine according to one of the preceding claims, **characterised in that** the toothed disks (4) have at least one radially oriented slot (34).

5. Transversal flux machine according to one of the preceding claims, **characterised in that** the flux tube (5) has at least one radially oriented slot (6).

6. Transversal flux machine according to claim 5, **characterised in that** the slot (6) in the flux tube is arranged at an angle to the longitudinal axis (3) of the machine.

7. Transversal flux machine according to one of the preceding claims, **characterised in that** the toothed disks (4) are composed of layers that are oriented perpendicularly to the longitudinal axis of the machine (3).

8. Transversal flux machine according to one of the preceding claims, **characterised in that** a control unit (22) is arranged on the stator shaft (16).

9. Transversal flux machine according to one of the preceding claims, **characterised in that** an additional toothed disk (37) having circumferentially arranged, radially oriented teeth (38) is arranged between the two toothed disks (4), the teeth (38) of the additional toothed disk (37) being offset from the teeth (33) of the two toothed disks (4) in the circumferential direction by half a tooth width.

## Revendications

1. Machine à flux transverse ayant au moins une unité polaire (29) extérieure du rotor et au moins une unité polaire (18) intérieure du stator agencée sur un axe de stator (16) et comprenant une bobine (13) agencée coaxialement à l'axe longitudinal (3) de la machine ainsi qu'un noyau de stator composé d'un tube de flux (5) agencé dans la bobine (13) et de disques dentés (4) agencés aux deux extrémités du tube de flux (5) et ayant des dents (33) circonférentielles radialement orientées, étant précisé que des moyens (8, 9, 10, 35, 36) pour la fixation géométrique de la position angulaire réciproque des disques dentés (4) et/ou des disques dentés (4) par rapport à l'axe de stator (16) sont pourvus, **caractérisée en ce que** le tube de flux est divisé en direction transversale, que chaque disque denté (4) est fixé à une partie respective du tube de flux et que les moyens pour la fixation géométrique de la position angulaire réciproque des disques dentés (4) sont réalisés sous la forme d'éléments à engagement géométrique (35, 36) agissant entre les deux parties du tube de flux (5).

2. Machine à flux transverse selon la revendication 1, **caractérisée en ce que** les moyens de fixation géométrique de la position angulaire réciproque des disques dentés (4) sont réalisés sous la forme d'éléments à engagement géométrique agissant entre les disques dentés (4) et le tube de flux (5).

3. Machine à flux transverse selon l'une des revendications précédentes, **caractérisée en ce que** les moyens de fixation géométrique de la position angulaire des disques dentés (4) par rapport à l'axe de stator sont constitués de corps annulaires (8, 9) ayant au moins une saillie de retenue s'étendant en direction axiale qui s'engage entre les dents (33) et au moins une saillie de guidage (31) s'étendant radialement vers l'intérieur qui s'engage dans une rainure longitudinale (17) de l'axe de stator (16).

4. Machine à flux transverse selon l'une des revendications précédentes, **caractérisée en ce que** les disques dentés (4) présentent au moins une fente (34) orientée en direction radiale.

5. Machine à flux transverse selon l'une des revendications précédentes, **caractérisée en ce que** le tube de flux (5) présente au moins une fente (6) orientée en direction radiale.

6. Machine à flux transverse selon la revendication 5, **caractérisée en ce que** la fente (6) dans le tube de flux est agencée à un angle par rapport à l'axe longitudinal (3) de la machine.

7. Machine à flux transverse selon l'une des revendications précédentes, **caractérisée en ce que** les disques dentés (4) sont composés de couches orientées perpendiculairement à l'axe longitudinal (3) de la machine.

8. Machine à flux transverse selon l'une des revendications précédentes, **caractérisée en ce qu'**une unité de commande (22) est agencée sur l'axe de stator (16).

9. Machine à flux transverse selon l'une des revendications précédentes, **caractérisée en ce qu'**entre les deux disques dentés (4) est agencé un disque denté supplémentaire (37) ayant des dents (38) circonférentielles radialement orientées, les dents (38) dudit disque denté (37) supplémentaire étant décalées d'une demi-largeur de dent en direction circonférentielle par rapport aux dents (33) des deux disques dentés (4).
